## Europäisches Patentamt
## European Patent Office
## Office européen des brevets

(19)

(11) Veröffentlichungsnummer: **0 009 550**
**B1**

(12) **EUROPÄISCHE PATENTSCHRIFT**

(45) Veröffentlichungstag der Patentschrift: **19.05.82**

(51) Int. Cl.³: **G 11 B 15/54**

(21) Anmeldenummer: **79102421.9**

(22) Anmeldetag: **12.07.79**

(54) Verfahren und Schaltungsanordnung zum Verkürzen des Stopweges des Bandes in Magnetbandgeräten.

(30) Priorität: **21.09.78 DE 2841106**

(43) Veröffentlichungstag der Anmeldung:
**16.04.80 Patentblatt 80/8**

(45) Bekanntmachung des Hinweises auf die Patenterteilung:
**19.05.82 Patentblatt 82/20**

(84) Benannte Vertragsstaaten:
**AT BE CH FR GB IT NL**

(56) Entgegenhaltungen:
**DE - A - 2 319 713**
**DE - A1 - 2 529 151**
**DE - A1 - 2 713 588**
**DE - B - 1 524 894**

(73) Patentinhaber: **SIEMENS AKTIENGESELLSCHAFT**
**Berlin und München**
**Postfach 22 02 61**
**D-8000 München 22 (DE)**

(72) Erfinder: **Dengler, Robert**
**Richard-Wagner-Strasse 14**
**D-8081 Türkenfeld (DE)**
Erfinder: **Meyer, Franz-Josef**
**Heinrich-Feller-Strasse 12**
**D-8080 Emmering (DE)**

Verfahren und Schaltungsanordnung zum Verkürzen des
Stopweges des bandes in Magnetbandgeräten

Die Erfindung bezieht sich auf ein Verfahren zum Verkürzen des Stopweges des Bandes bzw. zum Verringern der Systembelastung in Magnetbandgeräten, bei denen der Motor für die Bandantriebsrolle mit einem Tachometer verbunden ist, der bei Bewegung des Motors eine der Geschwindigkeit desselben proportionale Impulsfolge liefert, und bei denen eine neugeschriebene Information mit Hilfe eines getrennten Lesekopfes sofort anschließend kontrollgelesen wird.

Bei digitalen Magnetbandgeräten mit hoher Aufzeichnungsdichte, wie bei nach dem GCR-Verfahren arbeitenden Magnetbandgeräten, beträgt z.B. die nominale Blocklücke 7,63 mm. Bei hohen Bandgeschwindigkeiten ergeben sich daraus hohe Beschleunigungswerte, die beim Starten des Gerätes zu Bandschwingungen führen können. Es wäre daher an sich günstig, geringe Werte der Startbeschleunigung zu wählen. Dies würde aber zu einer Verlängerung des Startweges und einer Verlängerung der Blocklücke führen. Um den Nominalwert der Blocklücke einzuhalten, kann jedoch dieser längere Startweg durch eine Verkürzung des Stopweges kompensiert werden.

Fig. 1 zeigt verschiedene Start- und Stopwege sowie Stopprofilstrecken von Magnetbandgeräten beim Stoppen des Bandes und dabei insbesondere Fig. 1d die Verhältnisse bei dem erfindungsgemäßen Verfahren.

Fig. 2 zeigt eine Schaltungsanordnung zur Durchführung des erfindungsgemäßen Verfahrens.

Fig. 3 zeigt ein Impulsdiagramm für die in der Schaltungsanordnung nach Figur 2 verwendeten Taktimpulse.

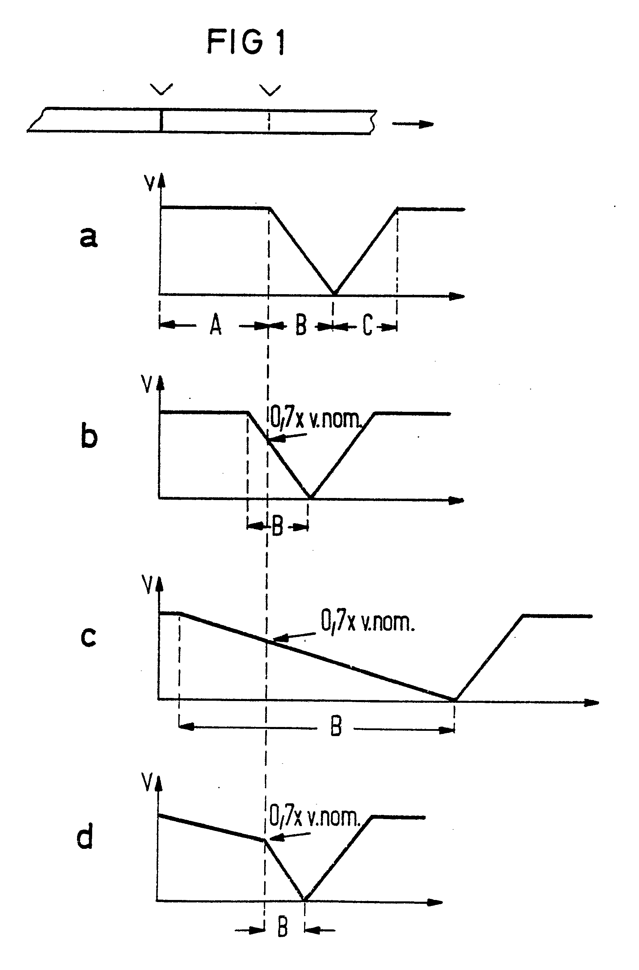

Die Blocklücke bei digital arbeitenden Magnetbandgeräten ist, wie in Figur 1, Zeil a angedeutet ist, durch die Summe von Start-und Stopweg, d.h. der Summe der Wege A, B und C definiert, wobei sich der Stopweg aus dem Abstand A zwischen Schreib-und Lesekopf und der sogenannten Stopprofilstrecke B zusammensetzt.

Um den gesamten Stopweg zu werkürzen, wäre es möglich, die Lesesignalauswerteelektronik so auszubilden, daß ein Lesen der aufgezeichneten Informationen auch noch bei einem Geschwindigkeitsabfall von 30% der Nominalgeschwindigkeit möglich ist. Mit einer derart ausgestalteten Lesesignalauswerteelektronik ist ein Stopwert des Magnetbandes erreichbar, wie er in Fig. 1, Zeile b gezeigt ist. Dort ist zu erkennen, daß die Stopprofilstrecke B bereits beginnt, während der Lesekopf noch die gerade aufgezeichnete Information kontrolliert. Wenn der Beginn der Stopprofilstrecke B und die Verzögerung des Magnetbandes während der Stopprofilstrecke B so gewählt sind, daß die Bandgeschwindigkeit am Ende des Kontrollesens noch 0,7 × Nominalgeschwindigkeit

beträgt, kann, wie Fig. 1, Zeile b zeigt, eine Verkürzung des gesamten Stopweges erreicht werden. Diese Methode hat aber den Nachteil, daß beim Übergang zum kontinuierlichen Bandlauf in die Phase starker Bandverzögerung Abweichungen der Bandgeschwindigkeit durch Bandschwingungen auftreten, die zu Auswertefehlern führen können.

Derartige Abweichungen der Bandgeschwindigkeit durch Bandschwingungen beim Übergang vom kontinuierlichen Bandlauf in die Verzögerungsphase könnten durch geringere Verzögerung des Magnetbandes vermieden werden. Dies würde aber, wie Figur 1 in Zeile c zeigt, keine Verkürzung des Stopweges sondern eine Verlängerung desselben mit sich bringen, wenn davon ausgegangen wird, daß die Bandgeschwindigkeit am Ende des Kontrollesens noch 0,7 × Nominalgeschwindigkeit sein muß.

Der Erfindung lag daher die Aufgabe zugrunde, ein Verfahren und eine Schaltungsanordnung zum Verkürzen des Stopweges des Bandes in Magnetbandgeräten zu schaffen, bei denen zwar von der Tatsache Gebrauch gemacht wird, daß die Verzögerung des Magnetbandes bereits während des Kontrollesens beginnt, bei denen aber unzulässige Abweichungen der Bandgeschwindigkeit während des Kontrollesens, hervorgerufen durch Bandschwingungen, mit Sicherheit vermieden werden. Erfindungsgemäß wird dies dadurch erreicht, daß das Magnetband während des gesamten Kontrollesens schwach und sofort nach dessen Beendigung stark verzögert wird, bis es zum Stillstand kommt (Fig. 1d). Durch die unterschiedliche Verzögerung des Magnetbandes während des Stopweges wird ein problemloser Übergang vom kontinuierlichen Bandlauf in die Verzögerungsphase und eine Verkürzung des Stopweges durch den Sprung auf höhere Verzögerungswerte nach dem Ende des Kontrollesens erreicht.

Die Erfindung kann aber auch dazu benutzt werden, die Belastung des gesamten Antriebssystems und den Leistungsverbrauch zu verringern, indem das Magnetband nach der zunächst schwachen Verzögerung während des Kontrollesens anschliessend nicht mit der maximal möglichen Verzögerung verlangsamt wird.

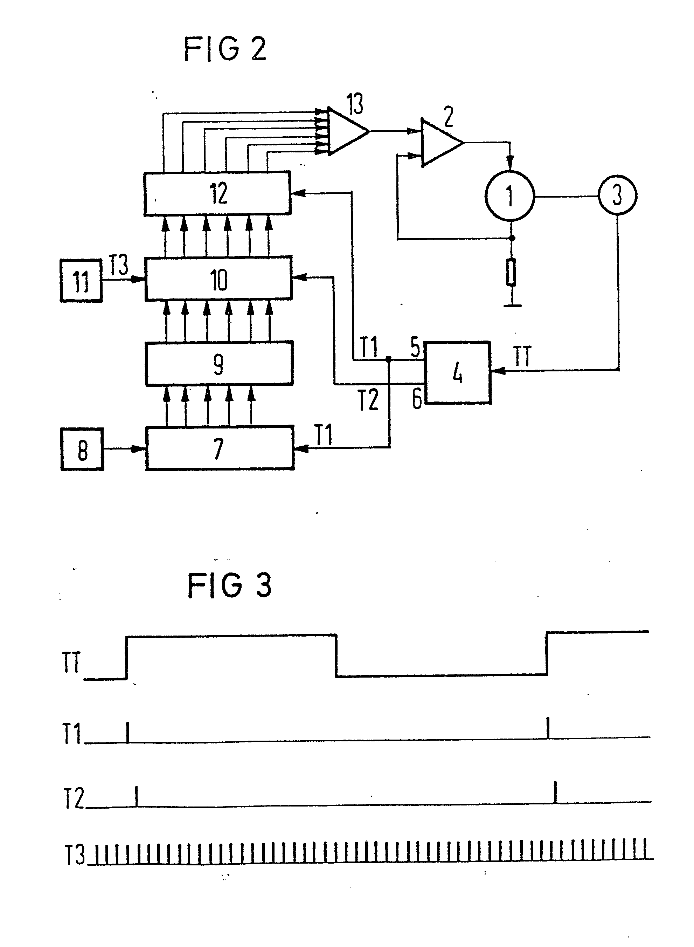

Vorsteile der Erfindung ergeben sich aus der Beschreibung eines Ausführungsbeispiels der erfindungsgemäßen Schaltungsanordnung, wie es in Figur 2 gezeigt ist.

Die in dem vereinfachten Blockschaltbild von Figur 2 gezeigte Anordnung besteht zunächst aus einem Motor 1, der in bekannter Weise mit einem Regelverstärker 2 zusammenarbeitet und außerdem mechanisch mit einem Tachometer 3 verbunden ist. In der Regel sitzt der Tachometer 3 auf der Welle des Motors 1. Erfindungsgemäß werden nun aus den vom Tachometer 3 gelieferten Tachotaktimpulsen TT (s. Fig. 3) mit Hilfe einer Einrichtung 4 zwei gegeneinander um einen geringen Betrag phasenverschobene Taktimpulsfolgen T1 und T2 abgeleitet, wie sie in ihrer Form und in ihrer Relation zu den Tachotaktimpulsen TT in Figur 3 gezeigt sind. Der Ausgang 5 dieser Taktimpulsformereinrichtung 4 ist mit einem Zähler 7 verbunden, der ab einem gewissen Zeitpunkt, der durch die Ablaufsteuerung 8 festgelegt wird, die von der Einrichtung 4 gelieferten Taktimpulse T1 zählt. Da der Tachometer 3 starr mit dem Motor und dieser in bekannter Weise starr mit der Antriebsrolle für das Magnetband verbunden ist, und da die Taktimpulse T1 aus den Tachotaktimpulsen TT abgeleitet sind, repräsentiert der jeweilige Zählerstand des Zählers 7 den vom Band zurückgelegten Weg zu den Zeitpunkten, da die Taktimpulse T1 auftreten.

Mit den Ausgängen des Zählers 7 ist ein Festwertspeicher 9, z.B. in Form eines PROM, verbunden, in welchem für den gesamten Stopweg die Sollgeschwindigkeitswerte des Magnetbandes an bestimmten festgestellten Punkten des Stopweges gespeichert sind. Diese Punkte des Stopweges entsprechen den im Zähler 7 sich ergebenden Zählerständen. Das heißt, wenn der Festwertspeicher 9 unmittelbar durch den Zähler 7 addressiert wird, dann ist es möglich, an den Ausgängen des Festwertspeichers 9 jeweils beim Erreichen bestimmter Punkte des Stopweges Signale abzugeben, die die Sollgeschwindigkeitswerte des Bandes an diesen Punkten darstellen.

Die Ausgänge des Festwertspeichers 9 sind deshalb mit den Eingängen eines zweiten Zählers 10 so verbunden, daß dieser Zähler jeweils beim Eintreffen eines der Taktimpulse T2, die ja definitionsgemäß gegenüber den Taktimpulsen T1 geringfügig phasenverschoben sind, mit den von dem Festwertspeicher 9 gelieferten Ausgangssignalen auf die jeweilige Sollgeschwindigkeit des Bandes eingestellt wird. Der Zähler 10 wird nun durch von einem Taktimpulsgeber 11 gelieferte Taktimpulse T3 zurückgezählt, bis wieder ein Impuls der Taktimpulsfolge T1 auftritt. Die Folgefrequenz der Taktimpulse T3 soll dabei wesentlich höher sein als die Folgefrequenz der Taktimpulse T1 bzw. T2. Da die Folgefrequenz der Taktimpulse T3 fest ist, andererseits aber die Taktimpulse T1 und T2 aus den Tachotaktimpulsen TT abgeleitet und somit abhängig von der Bandgeschwindigkeit sind, repräsentiert der jeweils beim Auftreten eines Taktimpulses T1 sich ergebende Zählerstand des Zählers 10 die Differenz zwischen der Istgeschwindigkeit des Bandes und dem in dem Festwertspeicher 9 gespeicherten Wert seiner Sollgeschwindigkeit.

Dieser Zählerstand wird dann unter Steuerung eines Taktimpulses T1 in ein Register 12 übernommen und dort bis zum Auftreten des nächsten Taktimpulses T1 festgehalten. Das Register 12 steuert seinerseits einen Digital-Analog-Wandler 13 an, der in an sich bekannter Weise den Regelverstärker 2 für den Motor 1 steuert. Mit Hilfe dieses Regelverstärkers 2 wird dann der Bremsstrom für den Motor eingestellt.

Liste der Bezugzeichen

| A | Abstand zwischen Schreib-und Lesekopf |
|---|---|
| B | Stopprofilstrecke |
| C | Startweg |
| v.nom. | Nominalgeschwindigkeit |
| 1 | Motor |
| 2 | Regelverstärker |
| 3 | Tachometer |
| 4 | Taktimpulsformer |
| 5 | Ausgang für Taktimpuls T1 |
| 6 | Ausgang für Taktimpuls T2 |
| 7 | Wegzähler |
| 8 | Ablaufsteuerung |
| 9 | Festwertspeicher |
| 10 | Geschwindigkeitszähler |
| 11 | Taktimpulsgeber |
| 12 | Register |
| 13 | Digital/Analog-Wandler |
| TT, T1, T2, T3 | Taktimpulse |

**Patentansprüche**

1. Verfahren zum Verkürzen des Stopweges des Bandes bzw. zum Verringern der Systembelastung in Magnetbandgeräten, bei denen der Motor für die Bandantriebsrolle mit einem Tachometer verbunden ist, der bei Bewegung des Motors eine der Geschwindigkeit desselben proportionale Impulsfolge liefert, und bei deren eine neu geschriebene Information mit Hilfe eines getrennten Lesekopfes sofort anschließend kontrollgelesen wird, dadurch gekennzeichnet, daß das Magnetband während des gesamten Kontrollesens schwach und sofort nach dessen Beendigung stark verzögert wird, bis es zum Stillstand kommt.

2. Verfahren nach Anspruch 1, dadurch gekennzeichnet, daß das Band während des Kontrollesens gerade so weit verzögert wird, daß seine Geschwindigkeit am Ende des Kontrollesens 0,7 × Nominalgeschwindigkeit beträgt.

3. Schaltungsanordnung zur Durchführung des Verfahrens nach Anspruch 1 oder 2, gekennzeichnet durch einen ersten Zähler (7), der durch aus dem Tachotakt (TT) abgeleitete erste Taktimpulse (T1) so weitergeschaltet wird, daß sein jeweiliger Zählerstand den vom Band während des Stoppens zurückgelegten Weg repräsentiert, durch einen Festwertspeicher (9), der durch den Zähler (7) unmittelbar adressiert wird und der für den gesamten Stopweg die Sollgeschwindigkeitswerte des Bandes an bestimmten fesgestellten Punkten des Stopweges speichert, durch einen zweiten Zähler (10), der jeweils durch aus dem Takt (TT) abgeleitete zweite Taktimpulse (T2) mit den im Festwertspeicher (9) gespeicherten Werten voreingestellt und durch im Vergleich zu den Tachotaktimpulsen hochfrequente Taktimpulse (T3) fester Folgefrequenz bis zum Eintreffen eines Impulses der ersten Taktimpulse (T1) zurückgezählt wird, durch ein Register (12), in welches unter Steuerung der ersten Taktimpulse (T1) jeweils der im zweiten Zähler (10) erreichte Zählerstand übernommen wird, durch einen Digital-Analog-Wandler (13), der jeweils den in dem Register (12) stehenden Digitalwert in einen zum Steuern des Motors (1) geeigneten Analogwert umwandelt und durch eine Einrichtung (4) zum Erzeugen von zwei gegeneinander phasenverschobenen Taktimpulsfolgen (T1, T2) aus den Tachotaktimpulsen (TT).

**Revendications**

1). Procédé pour raccourcir la distance d'arrêt de la bande ou pour réduire la charge du système dans des appareils à bande magnétique dans lesquels le moteur pour le rouleau d'entraînement de la bande est relié à un tachymètre qui, lorsque le moteur est en mouvement, fournit un train d'impulsions, et dans lesquels une information nouvellement inscrite est lue immédiatement après, en mode de contrôle, au moyen d'une tête de lecture distincte, caractérisé par le fait que la bande magnétique est faiblement retardé pendant toute la lecture en mode de contrôle puis est, immédiatement après la fin de cette lecture, fortement retardée jusqu'à son arrêt.

2). Procédé selon la revendication 1, caractérisé par le fait que la bande est retardée pendant la lecture en mode de contrôle jusqu'à ce que sa vitesse à la fin de cette lecture, soit égale à 0,70×la vitesse nominale.

3). Montage pour la mise en oeuvre du procédé selon la revendication 1 ou 2, caractérisé par un premier compteur (7) qui est commuté à l'aide d'un premier train d'impulsions (T1) dérivé de la cadence tachymétrique (TT) pour que son état de comptage représente le chemin parcouru par la bande pendant son arrêt, par une mémoire morte (9) qui est adressée directement par le compteur (7) et qui mémorise pour la totalité de la distance d'arrêt la valeur de la vitesse de consigne de la bande en certains points déterminés de ce chemin, par un second compteur (10) qui est réglé à l'avance, par des impulsions de cadence (T2) dérivées de la cadence (TT) avec les valeurs mémorisées dans la mémoire morte (9) et qui est compté dans le sens décroissant par des impulsions de cadence de fréquence élevées et de fréquence de répétition fixe, comparativement aux impulsions de cadence du tachymètre, jusqu'à l'arrivée d'une impulsion des premières impulsions de cadence (T1), par un registre (12) dans lequel est pris en charge, sous la commande des premières impulsions de cadence (T1), l'état de comptage assumé par le second compteur (10), par un convertisseur numérique/analogique qui convertit la valeur numérique et qui est présente dans le registre en une valeur analogique appropriée pour la commande du moteur (1) et par un dispositif (4) pour produire, à partir des impulsions de cadence du tachymètre (TT), deux trains d'impulsions (T1, T2) déphasés entre eux.

**Claims**

1. Process for shortening the stop path of the tape or reducing the system load in magnetic tape devices, wherein the motor for the tape driving roller is connected to a tachometer which, when the motor moves, supplies a pulse train proportional to the speed of said movement, and wherein a newly recorded item of information is immediately subjected to a control readout with the aid of a separate read-out head, characterised in that during the entire control read-out process the magnetic tape is subject to a slight slowing down, and immediately at the end of said control read-out process is subject to a substantial slowing down until it comes to a halt.

2. Process as claimed in claim 1, characterised in that during the control read-out process the tape is slowed down to such an extent that at the end of the control read-out process its speed amounts to 0.7×nominal speed.

3. Circuit arrangement for the implementation of the process claimed in claim 1 or 2, characterised by a first counter (7) which is stepped on by first clock pulses (T1) derived from the tachometer pulse train (TT), to such an extent that its count in each case represents the path covered by the tape during the stopping process, further characterised by a ROM (9) which is directly addressed by the counter (7) and which stores the theoretical speed values of the tape at specific, predetermined points of the stopping path for the entire length of the stopping path, further characterised by a second counter (10) which is preset by second clock pulses (T2) which are derived from the pulse train (TT) and which possess the values stored in the ROM (9), and which is reset by clock pulses (T3) of fixed repetition frequency which are high in frequency in comparison to the tacho-pulse train pulses until the arrival of one of the first clock pulses (T1), further characterised by a register (12) into which the count reached in the second counter (10) is transferred under the control of the first clock pulses (T1), further characterised by a digital/analogue converter (13) which converts the digital value contained in the register (12) into an analogue value which is suitable to control the motor (1), and finally characterised by a device (4) which serves to produce two clock pulse sequences (T1, T2), displaced in phase relative to one another, from the tachometer pulse train pulses (TT).

0 009 550

FIG 1

## FIG 2

## FIG 3